(19) Europäisches Patentamt
European Patent Office
Office européen des brevets

(11) EP 2 092 386 B1

## (12) FASCICULE DE BREVET EUROPEEN

(45) Date de publication et mention
de la délivrance du brevet:
**30.06.2010 Bulletin 2010/26**

(21) Numéro de dépôt: **07847691.8**

(22) Date de dépôt: **03.12.2007**

(51) Int Cl.:
***G02B 23/12*** *(2006.01)*

(86) Numéro de dépôt international:
**PCT/EP2007/063180**

(87) Numéro de publication internationale:
**WO 2008/071579 (19.06.2008 Gazette 2008/25)**

(54) **SYSTEME D'IMAGERIE IR2-IR3 BI-CHAMP COMPACT**

KOMPAKTES ZWEIFELD-IR2-IR3-BILDGEBUNGSSYSTEM

COMPACT DUAL-FIELD IR2-IR3 IMAGING SYSTEM

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **13.12.2006 FR 0610871**

(43) Date de publication de la demande:
**26.08.2009 Bulletin 2009/35**

(73) Titulaire: **THALES**
**92200 Neuilly sur Seine (FR)**

(72) Inventeurs:
• **FORESTIER, Bertrand**
**75015 Paris (FR)**
• **JOUGLA, Paul**
**75015 Paris (FR)**

(74) Mandataire: **Henriot, Marie-Pierre et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A-99/59015          FR-A1- 2 623 298
FR-A1- 2 760 924**

• **AKRAM M N: "Design of a dual field-of-view optical system for infrared focal-plane arrays" PROCEEDINGS OF THE SPIE, SPIE, BELLINGHAM, VA, US, vol. 4767, 2002, pages 13-23, XP002446799 ISSN: 0277-786X**

EP 2 092 386 B1

**Description**

Le domaine de l'invention est celui des systèmes infrarouges PC (petit champ) GC (grand champ) compacts.

On connaît une caméra PC (3˚ x 2,25˚) et GC (9˚ x 6.75˚) ouverte à F/2.7, de focale petit champ $F_{PC}$ égale à environ 180 mm, de focale grand champ $F_{GC}$ égale à environ 60 mm, équipée d'un détecteur matriciel IR3 (7,5 -10 $\mu$m) à multi-puits quantiques.

Le comportement photométrique de cette caméra est optimisé pour l'infrarouge thermique. En effet :

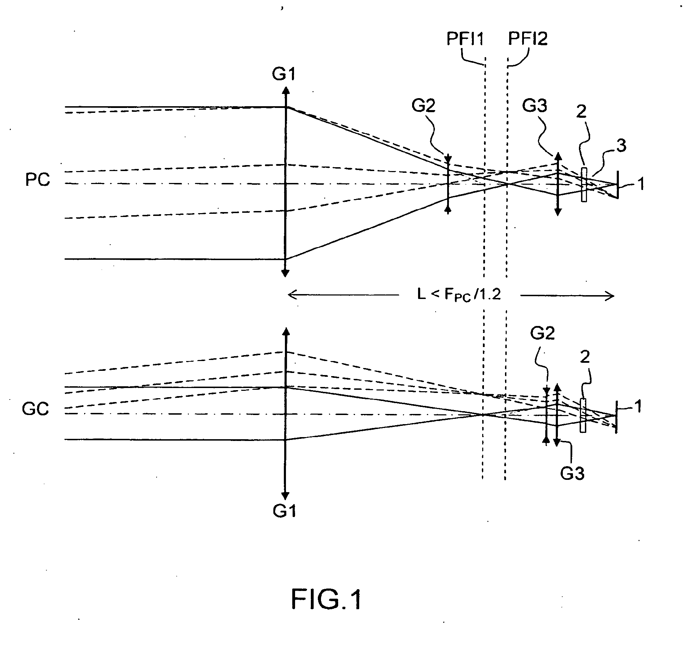

- le diaphragme d'ouverture est matérialisé par l'écran froid 3 du détecteur 1 (représentés figure 1) protégé par son hublot 2,
- il n'y a pas de vignettage car le seul élément limitant les faisceaux est le diaphragme d'ouverture.

Cette caméra est très compacte. En effet :

- le trajet L du faisceau le long de l'axe optique entre le dioptre d'entrée et le plan focal (le détecteur 1) est inférieur à $F_{PC}/1.2$,
- la section du conduit occupé par les faisceaux optiques est inférieure à $F_{PC}/2.5$ entre un plan situé à $F_{PC}$ mm en amont du dioptre d'entrée et le plan focal.

Cette compacité est obtenue grâce à :

- une pupille d'entrée petit champ située au voisinage de la lentille de tête : cette caractéristique impose la présence d'un PFI (Plan Focal Intermédiaire) dans la combinaison optique,
- une pupille d'entrée grand champ réelle c'est-à-dire située en amont de la lentille de tête.

La combinaison optique de cette caméra comprend les groupes dioptriques suivants décrits en relation avec la figure 1 :

a. un groupe de tête convergent G1 de focale F, avec $F<F_{PC}/2$ donc très ouvert,

b. un groupe divergent de changement de champ G2 mobile le long de l'axe optique ; ce groupe est situé en amont du PFI en configuration PC et en aval du PFI en configuration GC,

c. un groupe relais G3 imageant le PFI sur le plan focal du détecteur.

Le groupe G1 est achromatisé dans la bande IR3 grâce à une des séquences classiques Ge(+)/ZnSe(-) ou Ge(+)/ZnS(-) ou Ge(+)/DOE(+), avec Ge pour germanium, ZnSe pour séléniure de zinc, ZnS pour sulfure de zinc, DOE pour élément diffractif, + pour convergent, - pour divergent.

Le but de l'invention est de pouvoir utiliser une telle caméra et plus généralement un système d'imagerie également dans la bande IR2 (3,5 - 5 $\mu$m) avec un seul détecteur. Les 2 bandes ne sont toutefois pas utilisées en simultané : on sélectionne la bande utile en jouant sur la polarisation du détecteur.

La caméra existante, et plus précisément le groupe de tête G1, présente d'importantes aberrations chromatiques en IR2 qui compromettent son utilisation dans cette bande spectrale.

Le but de l'invention est d'obtenir un système d'imagerie IR2-IR3 compact bi-champ ne présentant pas les inconvénients sus-mentionnés.

L'invention est basée sur l'utilisation pour les lentilles, notamment celles du groupe de tête, d'un triplet de matériaux adapté aux 2 bandes spectrales. Les triplets utilisés contiennent du CaF2, communément appelé fluorine ; il s'agit des triplets Znse(+)/Ge(-)/CaF2(-) ou ZnS(+)/Ge(-)/CaF2(-).

L'invention a pour objet un système d'imagerie bi-champ (PC et GC) comportant un détecteur optronique et une combinaison optique de focale petit champ $F_{PC}$ présentant sur un axe optique :

- une lentille de tête,
- une pupille d'entrée petit champ située au voisinage de la lentille de tête,
- une pupille d'entrée grand champ réelle c'est-à-dire située en amont de la lentille de tête,
- un plan focal intermédiaire (PFI),

la combinaison optique comprenant sur l'axe optique les groupes dioptriques suivants :

- un groupe dioptrique de tête G1 convergent de focale F, avec $F<F_{PC}/2$, ce groupe G1 comprenant la lentille de tête,
- un groupe divergent de changement de champ G2 mobile le long de l'axe optique, ce groupe étant situé en amont du PFI en configuration PC et en aval du PFI en configuration GC,

- un groupe relais G3 imageant le PFI sur le plan focal du détecteur.

Il est principalement **caractérisé en ce que** le détecteur est un détecteur IR2 et IR3 refroidi, et en ce qu'au moins 3 matériaux différents dont du CaF2 sont utilisés pour les lentilles du groupe de tête dioptrique.

L'invention permet de diminuer la puissance des lentilles et donc leur nombre tout en conservant une bonne qualité optique, c'est-à-dire une bonne FTM. On obtient alors un système d'imagerie IR2-IR3 bi-champ compact.

De préférence, les lentilles du groupe dioptrique de tête G1 sont constituées à partir des triplets ZnSe(+)/Ge(-)/CaF2(-) ou ZnS(+)/Ge(-)/CaF2(-).

Selon une caractéristique de l'invention, le relais G3 comprend au moins une lentille diffractive (L3A).

Selon une autre caractéristique de l'invention, le détecteur est un détecteur matriciel ou linéaire, à multi-puits quantiques.

Avantageusement, le système d'imagerie présentant un écran froid , celui ci est utilisé comme diaphragme d'ouverture et tout vignettage est évité car seul ce diaphragme limite les faisceaux optiques.

D'autres caractéristiques et avantages de l'invention apparaîtront à la lecture de la description détaillée qui suit, faite à titre d'exemple non limitatif et en référence aux dessins annexés dans lesquels :

la figure 1 déjà décrite représente schématiquement la combinaison optique d'une caméra PC et GC, compacte selon l'état de la technique,

la figure 2 représente schématiquement un mode de réalisation d'un système d'imagerie selon l'invention, en mode PC et GC,

la figure 3 représente schématiquement un viseur de char comportant un système d'imagerie selon l'invention.

D'une figure à l'autre, les mêmes éléments sont repérés par les mêmes références.

On va à présent décrire les fonctions des différents éléments de la combinaison optique du système d'imagerie selon l'invention. Ces éléments sont globalement identiques à ceux de la caméra décrite en relation avec la figure 1.

Le groupe dioptrique de tête G1 image la scène sur un plan focal intermédiaire PFI1.

Cette image intermédiaire, virtuelle en petit champ et réelle en grand champ est reprise par le groupe divergent G2 (comprenant préférentiellement une seule lentille L2), qui donne une image sur un second plan image intermédiaire PFI2, réel en petit champ et virtuel en grand champ. La lentille divergente L2 est placée avant les plans images intermédiaires PFI1 et PFI2 en petit champ, après les plans image intermédiaires PFI1 et PFI2 en grand champ. Les 2 plans PFI1 et PFI2 sont positionnés au même endroit pour les 2 configurations petit champ ou grand champ. La lentille divergente image le premier plan PFI1 sur le deuxième PFI2 avec un grandissement de $\sqrt{(F_{PC}/F_{GC})}$ en petit champ, et de $1/\sqrt{(F_{PC}/F_{GC})}$ en grand champ. Cette fonction permet d'avoir une focale petit champ $F_{PC}/F_{GC}$ fois plus grande que la focale grand champ.

Le deuxième plan focal PFI2 est ensuite repris par le groupe relais G3 de grandissement compris entre 1.3 et 1.5 environ. Son plan objet est réel.

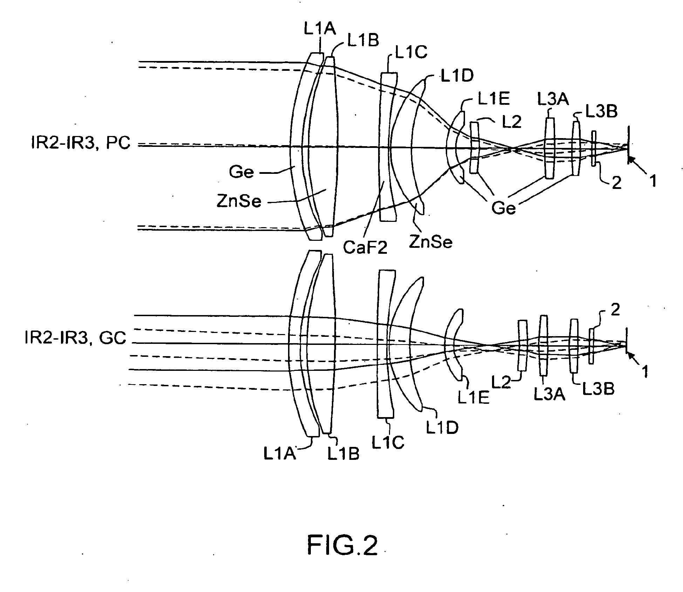

Le groupe relais G3 comprend de préférence 2 lentilles L3A et L3B comme représenté figure 2.

Le chromatisme interbande n'étant pas corrigé, les plans focaux intermédiaires IR2 et IR3 de l'objectif de tête ne sont pas superposés. Le groupe G2, mobile sur l'axe pour permettre le changement de champ, permet en outre de refocaliser l'image sur le détecteur lorsque l'utilisateur change de bande spectrale.

Le mouvement axial du groupe G2 permet en outre d'assurer une refocalisation de l'image lorsque la température interne du système d'imagerie change ou afin d'observer à distance rapprochée.

Afin d'affiner la refocalisation en thermique, à distance rapprochée ou lors du changement de bande spectrale, une des lentilles du groupe G3 (préférentiellement la lentille L3A) peut aussi être rendue mobile sur l'axe.

L3B est préférentiellement une lentille de microscanning qui permet de translater l'image de la scène sur le détecteur de 1/2 pixel. Cette fonction permet d'augmenter la résolution du système d'imagerie.

Cette configuration permet d'obtenir un système d'imagerie PC-GC ; la pupille d'entrée petit champ est située au voisinage de la lentille de tête, et la pupille d'entrée grand champ est réelle c'est-à-dire située en amont de la lentille de tête, ce qui facilite l'implantation du système d'imagerie dans un système périscopique de visée car on élimine ainsi le risque de vignettage des faisceaux GC.

Dans cette architecture, les aberrations chromatiques du groupe de tête G1 sont les plus importantes.

On rappelle les équations du chromatisme. Soit un module optique, de puissance $\phi$, que l'on souhaite corriger du chromatisme axial dans chacune des 2 bandes spectrales. Ce module comprend 3 lentilles fabriquées chacune dans un matériau différent. On note A, B et C les 3 lentilles, et :

$$\begin{cases} \phi A,\ \phi B,\ \phi C \text{ les puissances respectives des 3 lentilles,} \\ \nu 1A \text{ et } \nu 2A \text{ les constringences IR2 et IR3 du matériau A,} \\ \nu 1B \text{ et } \nu 2B \text{ les constringences IR2 et IR3 du matériau B,} \\ \nu 1C \text{ et } \nu 2C \text{ les constringences IR2 et IR3 du matériau C.} \end{cases}$$

Les équations pour la correction paraxiale du chromatisme d'un triplet sont les suivantes :

$$\begin{cases} \phi=\phi A+\phi B+\phi C \\ \phi A/\nu 1A + \phi B/\nu 1B + \phi C/\nu 1C = 0 \quad \text{(correction du chromatisme IR2)} \\ \phi A/\nu 2A + \phi B/\nu 2B + \phi C/\nu 2C = 0 \quad \text{(correction du chromatisme IR3)} \end{cases}$$

Ces équations assurent la correction du chromatisme sur la bande IR2, et sur la bande IR3. Par contre il peut subsister du chromatisme interbande : les plans focaux intermédiaires IR2 et IR3 de l'objectif de tête ne sont pas superposés.

Le triplet de matériaux ZnSe(+)/Ge(-)/ZnS(-) est connu pour assurer une achromatisation dans les bandes IR2 et IR3. Mais l'utilisation de ce triplet conduit à des puissances de lentilles en ZnSe et ZnS qui sont bien plus importantes que la puissance du groupe de tête. On est donc limité à des groupes de tête peu puissants ou peu ouverts ou encombrants. Si par exemple, la puissance d'un triplet de lentilles respectivement en ZnSe, Ge et ZnS vaut 1, les puissances de ces lentilles valent respectivement environ 2.7, -0.6 et -1.1. L'ouverture de la lentille en ZnSe est donc 2.7 fois plus importante que l'ouverture du groupe de tête qui est déjà très ouvert.

Avec les contraintes de compacité de l'invention on est alors conduit à multiplier le nombre de lentilles ( au moins 7) dans le groupe de tête afin de limiter l'ouverture de chacune d'entre elles à une valeur raisonnable. Ce grand nombre de lentilles augmente significativement le coût de la combinaison. En outre bien que la fonction de transfert de modulation (FTM) obtenue soit suffisante sur le plan théorique, elle est considérablement dégradée dès qu'on prend en compte les tolérances de fabrication et de montage des lentilles.

Selon l'invention, on utilise les triplets Znse(+)/Ge(-)/CaF2(-) ou ZnS(+)/Ge(-)/CaF2(-).

Le CaF2 est rarement utilisé en IR3 car il est absorbant pour $\lambda > 10\mu m$, alors que la plupart des détecteurs IR3 sont sensibles jusqu'à $12\mu m$. Le détecteur QWIP utilisé pour ce système d'imagerie n'est pas sensible pour $\lambda > 10\mu m$ et autorise donc l'utilisation de CaF2.

Le CaF2 présentant une constringence très faible par rapport aux autres matériaux infrarouges, il rend la correction du chromatisme très aisée. Si, par exemple, la puissance d'un triplet de lentilles respectivement en ZnSe, Ge et CaF2 vaut 1, les puissances de ces lentilles valent respectivement environ 1.62, -0.52 et -0.1. Si, par exemple, la puissance d'un triplet de lentilles respectivement en ZnS, Ge et CaF2 vaut 1, les puissances de ces lentilles valent respectivement environ 1.64, -0.4 et -0.24. On comprend ainsi tout l'intérêt de ce triplet par rapport à la solution classique ZnSe(+)/Ge(-)/ZnS(-).

Le chromatisme le plus important est corrigé de la manière suivante qui représente un mode de réalisation de l'invention représenté figure 2.

Le groupe de tête G1 comprend 5 lentilles L1A à L1E.

L1A est préférentiellement en Ge, divergente, sphérique. On place une lentille en Ge en tête pour protéger le système d'imagerie des agressions extérieures, qu'elles soient de nature électromagnétique ou climatique.

La lentille en ZnSe est dédoublée en L1B et L1D; L1B est asphérique pour corriger l'aberration sphérique.

L1C est en CaF2.

L'ensemble L1A à L1D est corrigé du chromatisme axial grâce à l'utilisation du triplet ZnSe/Ge/CaF2.

L1E est un ménisque en Germanium. Il permet de corriger la courbure de champ, et d'aider à la conjugaison de pupille sur la voie petit champ.

La transmission de la lentille en CaF2 vaut 96% en IR2 et 80% en IR3 compte tenu de l'absorption du CaF2 dans cette bande et en supposant que la lentille ne comprend pas de traitement anti-réfléchissant(l'indice de réfraction du CaF2 étant faible, la réflectivité naturelle du matériau est faible, alors qu'un traitement anti-reflet bi-spectral sur ce matériau est réputé peu performant).

Le triplet ZnSe(+)/Ge(-)/CaF2(-) (solution 1) a été utilisé.

Mais on peut aussi utiliser le triplet ZnS(+)/Ge(-)/CaF2(-) (solution 2).

Les solutions 1/ et 2/ sont équivalentes. La solution 1/ est préférée à la solution 2/ car la lentille en CaF2 de la solution 1 est moins puissante que la lentille en CaF2 de la solution 2 : donc potentiellement, pour un coût similaire, la FTM de la solution 1 est supérieure à la FTM de la solution 2.

Le chromatisme a été corrigé sur le groupe G1 principalement responsable du chromatisme. Cette correction peut être améliorée en corrigeant également le chromatisme des autres groupes G2 et G3.

La hauteur du rayon d'ouverture étant relativement petite sur chacune des lentilles L2, L3A et L3B des groupes G2 et G3 par rapport au demi-diamètre de la pupille d'entrée, la contribution de ces lentilles au chromatisme de la combinaison est intrinsèquement faible. Il suffit donc de réaliser ces composants dans un matériau relativement peu chromatique dans chacune des bandes utiles. Le meilleur candidat est le Germanium.

L2, L3A et L3B sont en Germanium. L2 et L3A sont asphériques, L3B est sphérique.

Toutefois, pour améliorer la FTM, il est utile de diminuer le chromatisme introduit par L3A. Une correction parfaite avec un triplet n'est pas nécessaire : on peut utiliser un doublet de matériaux. Ces doublets sont calculés à partir des équations suivantes :

Comme précédemment on note $\phi$ la puissance du module optique, en l'occurrence L3A,

$$\begin{cases} \phi A, \phi B \text{ les puissances respectives des 2 composants optiques,} \\ \nu 1A \text{ et } \nu 2A \text{ les constringences IR2 et IR3 du composant A,} \\ \nu 1B \text{ et } \nu 2B \text{ les constringences IR2 et IR3 du composant B,} \\ \lambda 1 \text{ est la longueur d'onde de pic de sensibilité de la bande IR2,} \\ \lambda 2 \text{ est la longueur d'onde de pic de sensibilité de la bande IR3.} \end{cases}$$

On note ν1 et ν2 les constringences équivalentes du doublet dans les bandes spectrales IR2 et IR3.

Elles sont définies par l'équation suivante :

$$\phi/\nu i = \phi A/\nu iA + \phi B/\nu iB$$

avec i=1 ou 2.

Les équations qui permettent de calculer les puissances $\phi A$ et $\phi B$ sont les suivantes :

$$\begin{cases} \phi = \phi A + \phi B \\ 1/\lambda 1 * (\phi A/\nu 1A + \phi B/\nu 1B) = -1/\lambda 2 * (\phi A/\nu 2A + \phi B/\nu 2B) \end{cases}$$

Ces équations garantissent que l'écart normal de chromatisme axial vaudra le même nombre de longueurs d'onde dans chacune des deux bandes spectrales respectives.

Les meilleurs doublets candidats pour L3A sont résumés dans le tableau ci-dessous. Ils sont classés par ordre de ν1 décroissant en valeur absolue.

| $\sqrt{\phi A^2 + \phi B^2}$ | A | ν1A | ν2A | B | ν1B | ν2B | $\phi A$ | $\phi B$ | ν1 | ν2 |
|---|---|---|---|---|---|---|---|---|---|---|
| 0.99 | IG4 | 388 | 676 | DOE* | -4 | -7 | 0.99 | 0.009 | -25985 | 13967 |
| 0.99 | GASIR1 | 395 | 472 | DOE* | -4 | -7 | 0.99 | 0.01 | -3198 | 1719 |
| 0.99 | GE | 240 | 1900 | DOE* | -4 | -7 | 0.99 | 0.01 | 1418 | -762 |
| 2.22 | ZNS | 186 | 97 | ZNSE | 322 | 232 | -0.99 | 1.99 | 1157 | -622 |
| 1.08 | ZNSE | 322 | 232 | CAF2 | 33 | 13 | 1.08 | -0.08 | 1070 | -575 |
| 1.19 | ZNS | 186 | 97 | CAF2 | 33 | 13 | 1.18 | -0.18 | 982 | -528 |

(suite)

| $\sqrt{\phi A^2 + \phi B^2}$ | A | ν1A | ν2A | B | ν1B | ν2B | φA | φB | ν1 | ν2 |
|---|---|---|---|---|---|---|---|---|---|---|
| 1.05 | CAF2 | 33 | 13 | GASIR1 | 395 | 472 | -0.05 | 1.05 | 937 | -504 |
| * DOE = élément diffractif (Diffractive Optical Element) | | | | | | | | | | |

Pour la correction du chromatisme de L3A, le meilleur doublet est IG4/DOE. Le doublet Ge/DOE est aussi un bon candidat, grâce à l'indice de réfraction élevé du Germanium.

Pour le doublet ZnSe/ ZnS les puissances des lentilles sont importantes. Il peut convenir pour un groupe peu ouvert, si on veut éviter des éléments diffractifs.

Le système d'imagerie selon l'invention peut être intégré dans une caméra IR, dans des jumelles IR ou dans un autre équipement optronique IR. Il peut être implanté dans un viseur de char, dans un système IR de détection par l'avant ou FLIRs (acronyme de l'expression anglo-saxonne « Forward-Looking Infra-Red system »), dans une nacelle ( « pod » en anglais) installée sur un aéronef.

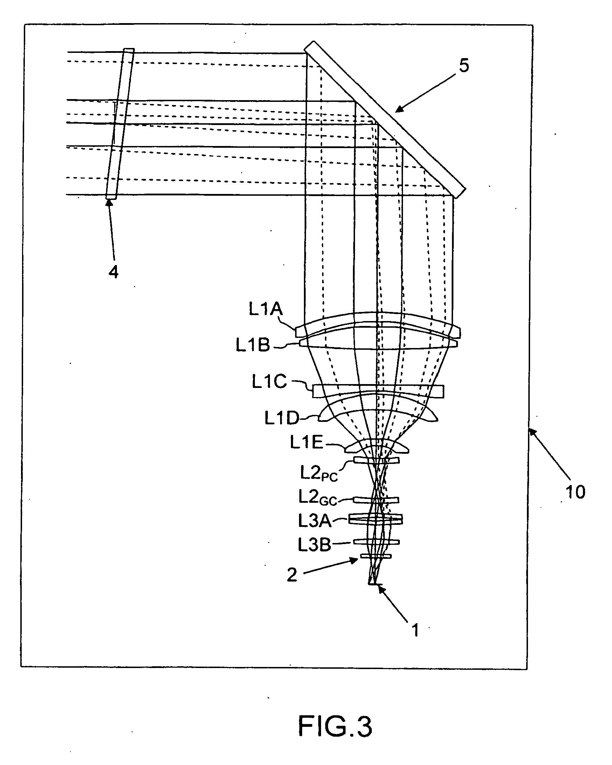

La figure 3 représente une telle implantation dans un viseur de char. Les différents modes de fonctionnement de la caméra (IR2 & IR3, PC & GC) ont été superposés sur la même figure. Le viseur de char 10 comprend un hublot 4 en Germanium, généralement placé en anti-narcisse, ainsi qu'un miroir gyrostabilisé 5. La figure 3 permet de comprendre pourquoi il est intéressant d'assurer la compacité du système d'imagerie en amont de la première lentille du système : cela permet de réduire la taille du hublot 4 et du miroir gyro stabilisé 5.

## Revendications

1.  Système d'imagerie bi-champ (petit et grand champ) comportant un détecteur optronique (1) et une combinaison optique de focale petit champ $F_{PC}$ présentant sur un axe optique :

    - une lentille de tête (L1A),
    - une pupille d'entrée petit champ située au voisinage de la lentille de tête,
    - une pupille d'entrée grand champ réelle c'est-à-dire située en amont de la lentille de tête,
    - un plan focal intermédiaire (PFI),

    la combinaison optique comprenant sur l'axe optique les groupes dioptriques suivants :

    - un groupe de tête (G1) convergent de focale F, avec $F<F_{PC}/2$, ce groupe G1 comprenant la lentille de tête,
    - un groupe divergent de changement de champ (G2) mobile le long de l'axe optique, ce groupe étant situé en amont du plan focal intermédiaire (PFI) en configuration petit champ et en aval du plan focal intermédiaire en configuration grand champ,
    - un groupe relais (G3) imageant le plan focal intermédiaire sur le plan focal du détecteur,

    **caractérisé en ce que** le détecteur (1) est un détecteur IR2 et IR3 refroidi, et **en ce que** au moins 3 matériaux différents dont du CaF2 sont utilisés pour les lentilles du groupe de tête (G1).

2.  Système d'imagerie selon la revendication précédente, **caractérisé en ce que** les triplets ZnSe(+)/Ge(-)/CaF2(-) ou ZnS(+)/Ge(-)/CaF2(-) sont utilisés dans le groupe de tête (G1).

3.  Système d'imagerie selon la revendication précédente, **caractérisé en ce que** le groupe de tête comprend cinq lentilles.

4.  Système d'imagerie selon la revendication précédente, **caractérisé en ce que** le groupe de tête comprend deux lentilles (L1A, L1E) en Ge, deux lentilles (L1B, L1D) en ZnS ou ZnSe, une lentille (L1 C) en CaF2.

5.  Système d'imagerie selon l'une des revendications précédentes, **caractérisé en ce que** le groupe (G2) comprend une lentille (L2) en Ge.

6.  Système d'imagerie selon l'une des revendications précédentes, **caractérisé en ce que** le relais (G3) comprend des lentilles en Ge.

**7.** Système d'imagerie selon l'une des revendications précédentes, **caractérisé en ce que** le relais (G3) comprend au moins une lentille diffractive (L3A).

**8.** Système d'imagerie selon l'une des revendications précédentes, **caractérisé en ce que** le relais (G3) comprend au moins une lentille mobile (L3A) suivant l'axe optique.

**9.** Système d'imagerie selon l'une des revendications précédentes, **caractérisé en ce que** le relais (G3) comprend au moins une lentille de microscanning (L3B) permettant de translater l'image sur le détecteur (1).

**10.** Système d'imagerie selon l'une des revendications précédentes, **caractérisé en ce que** le détecteur (1) est un détecteur linéaire ou matriciel.

**11.** Système d'imagerie selon la revendication précédente, **caractérisé en ce que** le détecteur (1) est un détecteur matriciel à multi-puits quantiques.

**12.** Système d'imagerie selon l'une des revendications précédentes, **caractérisé en ce que** le système d'imagerie le système d'imagerie présentant un écran froid (3), celui-ci forme un diaphragme d'ouverture.

**13.** Système d'imagerie selon l'une des revendications précédentes, **caractérisé en ce que** le système d'imagerie présentant un diaphragme d'ouverture, seul ce diaphragme limite les faisceaux optiques pour éviter le vignettage.

**14.** Caméra comportant un système d'imagerie selon l'une des revendications précédentes.

**15.** Jumelles comportant un système d'imagerie selon l'une des revendications 1 à 13.

**16.** Viseur de char comportant un système d'imagerie selon l'une des revendications 1 à 13.

**Claims**

**1.** A dual-field (narrow and wide field) imaging system comprising an optronic detector (1) and a narrow field $F_{PC}$ focal length optical combination having, on an optical axis:

- a front lens (L1A),
- a narrow field entrance pupil located in the vicinity of the front lens,
- an actual wide field entrance pupil, that is, situated upstream of the front lens,
- an intermediate focal plane (PFI),

the optical combination comprising the following dioptric groups on the optical axis:

- a convergent front group (G1) of focal length F, wherein $F<F_{PC}/2$, this group (G1) comprising the front lens,
- a divergent field change group (G2) capable of moving along the optical axis, this group being located upstream of the intermediate focal plane (PFI) in a narrow field configuration and downstream of the intermediate focal plane in a wide field configuration,
- a relay group (G3) imaging the intermediate focal plane on the focal plane of the detector,

**characterised in that** the detector (1) is a cooled IR2 and IR3 detector, and **in that** at least three different materials, one of which is CaF2, are used for the lenses of the front group (G1).

**2.** The imaging system according to the previous claim, **characterised in that** the triplets ZnSe(+)/Ge(-)/CaF2(-) or ZnS(+)/Ge(-)/CaF2(-) are used in the front group (G1).

**3.** The imaging system according to the previous claim, **characterised in that** the front group comprises five lenses.

**4.** The imaging system according to the previous claim, **characterised in that** the front group comprises two lenses (L1A, L1E) in Ge, two lenses (L1B, L1D) in ZnS or ZnSe and one lens (L1C) in CaF2.

5. The imaging system according to any one of the previous claims, **characterised in that** the group (G2) comprises a lens (L2) in Ge.

6. The imaging system according to any one of the previous claims, **characterised in that** the relay (G3) comprises lenses in Ge.

7. The imaging system according to any one of the previous claims, **characterised in that** the relay (G3) comprises at least one diffractive lens (L3A).

8. The imaging system according to any one of the previous claims, **characterised in that** the relay (G3) comprises at least one lens (L3A) capable of moving along the optical axis.

9. The imaging system according to any one of the previous claims, **characterised in that** the relay (G3) comprises at least one micro-scanning lens (L3B) allowing the image to be translated to the detector (1).

10. The imaging system according to any one of the previous claims, **characterised in that** the detector (1) is a linear or matrix detector.

11. The imaging system according to the previous claim, **characterised in that** the detector (1) is a multiple quantum well matrix detector.

12. The imaging system according to any one of the previous claims, **characterised in that** the imaging system has a cold screen (3) which forms an aperture diaphragm.

13. The imaging system according to any one of the previous claims, **characterised in that** the imaging system has an aperture diaphragm and only this diaphragm limits the optical beams to prevent vignetting.

14. A camera comprising an imaging system according to any one of the previous claims.

15. Binoculars comprising an imaging system according to any one of claims 1 to 13.

16. A tank sighting device comprising an imaging system according to any one of claims 1 to 13.


**Patentansprüche**

1. Zweifeld-(enges und weites Feld)-Bildgebungssystem, das einen optronischen Detektor (1) und eine optische Brennweitenkombination aus engem Feld $F_{PC}$ umfasst, das auf einer optischen Achse Folgendes aufweist:

   - eine vordere Linse (L1A),
   - eine in der Nähe der vorderen Linse befindliche Engfeld-Eintrittspupille,
   - eine reelle Weitfeld-Eintrittspupille, die sich oberhalb der vorderen Linse befindet;
   - eine Zwischenfokalebene (PFI),

   wobei die optische Kombination die folgenden dioptrischen Gruppen auf der optischen Achse umfasst:

   - eine konvergente vordere Gruppe (G1) mit Brennweite F, wobei $F<F_{PC}/2$, wobei diese Gruppe (G1) die vordere Linse umfasst,
   - eine divergente Feldwechselgruppe (G2), die sich entlang der optischen Achse bewegen kann, wobei sich die Gruppe oberhalb der Zwischenfokalebene (PFI) in einer Engfeldkonfiguration und unterhalb der Zwischenfokalebene in einer Weitfeldkonfiguration befindet,
   - eine Relaisgruppe (G3), die die Zwischenfokalebene auf der Fokalebene des Detektors abbildet,

   **dadurch gekennzeichnet, dass** der Detektor (1) ein gekühlter IR2- und IR3-Detektor ist, und **dadurch**, dass mindestens 3 verschiedene Materialien, darunter CaF2, für die Linsen der vorderen Gruppe (G1) verwendet werden.

2. Bildgebungssystem nach dem vorherigen Anspruch, **dadurch gekennzeichnet, dass** die Tripletts ZnSe(+)/Ge(-)/CaF2(-) oder ZnS(+)/Ge(-)/CaF2(-) in der vorderen Gruppe (G1) verwendet werden.

3. Bildgebungssystem nach dem vorherigen Anspruch, **dadurch gekennzeichnet, dass** die vordere Gruppe fünf Linsen umfasst.

4. Bildgebungssystem nach dem vorherigen Anspruch, **dadurch gekennzeichnet, dass** die vordere Gruppe zwei Linsen (L1A, L1E) in Ge, zwei Linsen (L1B, L1D) in ZnS oder ZnSe und eine Linse (L1C) in CaF2 umfasst.

5. Bildgebungssystem nach einem der vorherigen Ansprüche, **dadurch gekennzeichnet, dass** die Gruppe (G2) eine Linse (L2) in Ge umfasst.

6. Bildgebungssystem nach einem der vorherigen Ansprüche, **dadurch gekennzeichnet, dass** das Relais (G3) Linsen in Ge umfasst.

7. Bildgebungssystem nach einem der vorherigen Ansprüche, **dadurch gekennzeichnet, dass** das Relais (G3) mindestens eine diffraktive Linse (L3A) umfasst.

8. Bildgebungssystem nach einem der vorherigen Ansprüche, **dadurch gekennzeichnet, dass** das Relais (G3) mindestens eine Linse (L3A) umfasst, die sich entlang der optischen Achse bewegen kann.

9. Bildgebungssystem nach einem der vorherigen Ansprüche, **dadurch gekennzeichnet, dass** das Relais (G3) mindestens eine Mikroabtastlinse (L3B) umfasst, die das Translatieren des Bildes auf dem Detektor (1) zulässt.

10. Bildgebungssystem nach einem der vorherigen Ansprüche, **dadurch gekennzeichnet, dass** der Detektor (1) ein Linear- oder Matrixdetektor ist.

11. Bildgebungssystem nach dem vorherigen Anspruch, **dadurch gekennzeichnet, dass** der Detektor (1) ein Multi-Quantum-Well-Matrixdetektor ist.

12. Bildgebungssystem nach einem der vorherigen Ansprüche, **dadurch gekennzeichnet, dass** das Bildgebungssystem einen Kälteschirm (3) hat, der eine Aperturblende bildet.

13. Bildgebungssystem nach einem der vorherigen Ansprüche, **dadurch gekennzeichnet, dass** das Bildgebungssystem eine Aperturblende hat und nur diese Blende die optischen Strahlen begrenzt, um Vignettierung zu verhindern.

14. Kamera, die ein Bildgebungssystem nach einem der vorherigen Ansprüche umfasst.

15. Fernglas, das ein Bildgebungssystem nach einem der Ansprüche 1 bis 13 umfasst.

16. Sichteinrichtung für einen Panzer, die ein Bildgebungssystem nach einem der Ansprüche 1 bis 13 umfasst.

FIG.1

FIG.2

FIG.3